(19) Europäisches Patentamt
European Patent Office
Office européen des brevets

(11) **EP 3 115 985 A1**

(12) **EUROPEAN PATENT APPLICATION**
published in accordance with Art. 153(4) EPC

(43) Date of publication:
**11.01.2017 Bulletin 2017/02**

(21) Application number: **15758938.3**

(22) Date of filing: **27.01.2015**

(51) Int Cl.:
**G08G 1/127** *(2006.01)*     **G06Q 50/30** *(2012.01)*
**B61L 27/00** *(2006.01)*

(86) International application number:
**PCT/JP2015/052139**

(87) International publication number:
**WO 2015/133202 (11.09.2015 Gazette 2015/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.03.2014   JP 2014042147**

(71) Applicant: **Kabushiki Kaisha Toshiba
Minato-ku
Tokyo 105-8001 (JP)**

(72) Inventors:
• **AKIBA Takashi
Tokyo 105-8001 (JP)**
• **YAMANE Fumiyuki
Tokyo 105-8001 (JP)**

(74) Representative: **Awapatent AB
Junkersgatan 1
582 35 Linköping (SE)**

(54) **DIAGRAM GENERATING METHOD**

(57)     A diagram creating method includes a first step and a second step. The first step includes generating a group of candidates for departure times at a first spot with reference to a temporal distribution of demand for movement to a second spot at the first spot and a minimum capacity among capacities of available vehicles. The second step includes creating a diagram from the first spot to the second spot by determining a type of vehicle which departs at one departure time from a group of types of the available vehicles for each candidate for a departure time belonging to the group of candidates for departure times. The group of types includes a type of vehicle indicating that the type of vehicle does not depart at the departure time.

FIG. 1

**Description**

[Technical Field]

The present invention relates to a diagram creating method.

[Background Art]

For an event which is held non-periodically such as a concert or a sports event, special shuttle buses may be caused to travel between a bus stop in the vicinity of a railway station or the like and a bus stop in the vicinity of an event site. When a plurality of types of vehicles are intended to be used when special shuttle buses travel in this way, the number of combinations increases and it is thus difficult to create a diagram which is suitable for a purpose such as demand, cost, or environmental load.

[Citation List]

[Patent Literature]

[Patent Literature 1] Japanese Unexamined Patent Application, First Publication No. 2001-030904

[Summary of Invention]

[Issue to be solved by the invention]

An object of the present invention is to provide a diagram creating method through which a diagram can be prepared using a plurality of types of vehicles having different capacities or different vehicle performance (for example, environmental loads based on a difference in drive system).

[Means for solving the issue]

A diagram creating method according to an embodiment includes a first step and a second step. The first step includes generating a group of candidates for departure times at a first spot with reference to a temporal distribution of demand for movement to a second spot at the first spot and a minimum capacity among capacities of available vehicles. The second step includes creating a diagram from the first spot to the second spot by determining a type of vehicle which departs at one departure time from a group of types of the available vehicles for each candidate for a departure time belonging to the group of candidates for departure times. The group of types includes a type of vehicle indicating that the type of vehicle does not depart at the departure time.

[Brief Description of Drawings]

Fig. 1 is a schematic diagram illustrating an operation of a shuttle bus according to a first embodiment.
Fig. 2 is a block diagram schematically illustrating a configuration of a diagram creating device 10 according to the first embodiment.
Fig. 3 is a graph illustrating an example of a temporal distribution of demand according to the first embodiment.
Fig. 4 is a table illustrating an example of vehicle information which is stored in a vehicle information storing unit 12 according to the first embodiment.
Fig. 5 is a flowchart illustrating an operation of a branch candidate generating unit 14 according to the first embodiment.
Fig. 6 is a flowchart illustrating a branch candidate determining process according to the first embodiment.
Fig. 7 is a graph illustrating the branch candidate determining process according to the first embodiment.
Fig. 8 is a table illustrating an example of chromosomes according to the first embodiment.
Fig. 9 is a flowchart illustrating an operation of a diagram creating unit 15 according to the first embodiment.
Fig. 10 is a table illustrating an example of chromosomes in a outbound path according to a second embodiment.
Fig. 11 is a flowchart illustrating an operation of a diagram creating unit 15 according to the second embodiment.
Fig. 12 is a table illustrating an example of chromosomes according to a third embodiment.
Fig. 13 is a flowchart illustrating an operation of a diagram creating unit 15 according to the third embodiment.
Fig. 14 is a flowchart illustrating an operation of a diagram output unit 16 according to a fourth embodiment.

[Description of Embodiments]

Hereinafter, diagram creating methods according to embodiments will be described with reference to the accompanying drawings.

(First Embodiment)

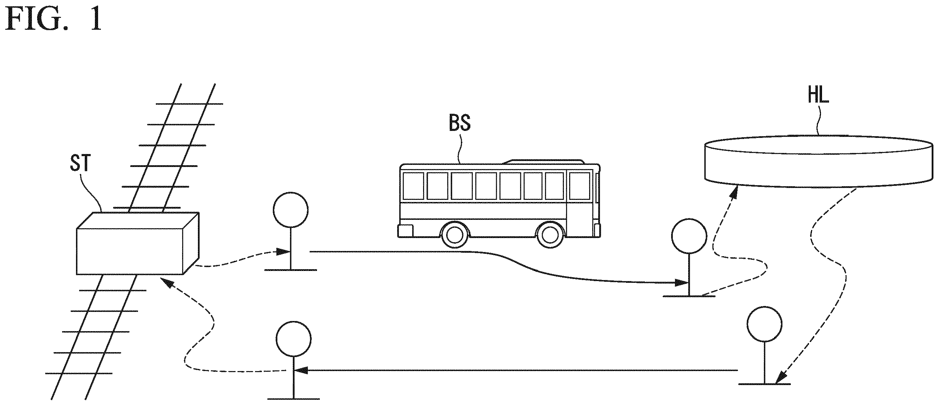

Fig. 1 is a schematic diagram illustrating an operation of a shuttle bus according to a first embodiment. When an event such as a concert or a sports event is held at an event site HL, demand for movement from a nearby station ST to the event site HL (an inbound path) increases at the time of start of the event. At the time of end of the event, demand for movement from the event site HL to the station ST (a outbound path) increases. In order to satisfy such demand for movement, shuttle buses BS bound for the event site HL from the nearby station ST may operate at the time of start of the event, and shuttle buses BS bound for the station ST from the event site HL may operate at the end of the event.

A participant in the event getting off a train at the station ST moves on foot to a bus stop (a first spot) in the vicinity of the station ST, gets on a shuttle bus BS, and moves to a bus stop (a second spot) in the vicinity of the event site HL on the shuttle bus. The participant moves on foot to the event site HL. When the event ends, the participant moves on foot from the event site HL to the bus stop in the vicinity of the event site HL, gets on a shuttle bus BS, and moves to the bus stop in the vicinity of the station ST on the shuttle bus.

Then, the participant moves on foot from the bus stop in the vicinity of the station ST to the station ST and gets on a train at the station ST. A diagram creating device according to this embodiment creates a diagram of the shuttle buses BS.

A diagram which is created for the inbound path includes a departure time at which a shuttle bus departs from the bus stop in the vicinity of the station ST and a type of a vehicle which is used as a branch of the departure time. A diagram which is created for the outbound path also includes a departure time at which a shuttle bus departs from the bus stop in the vicinity of the event site HL and a type of the vehicle which is used as a branch of the departure time. Here, for the outbound path, the diagram is created for each of a plurality of end times for the purpose of coping with a case in which the event does not end at a scheduled time. It is assumed that the shuttle bus BS used for the outbound path is made to stay in the vicinity of the event site HL and is used for the outbound path, but is not used again for the inbound path.

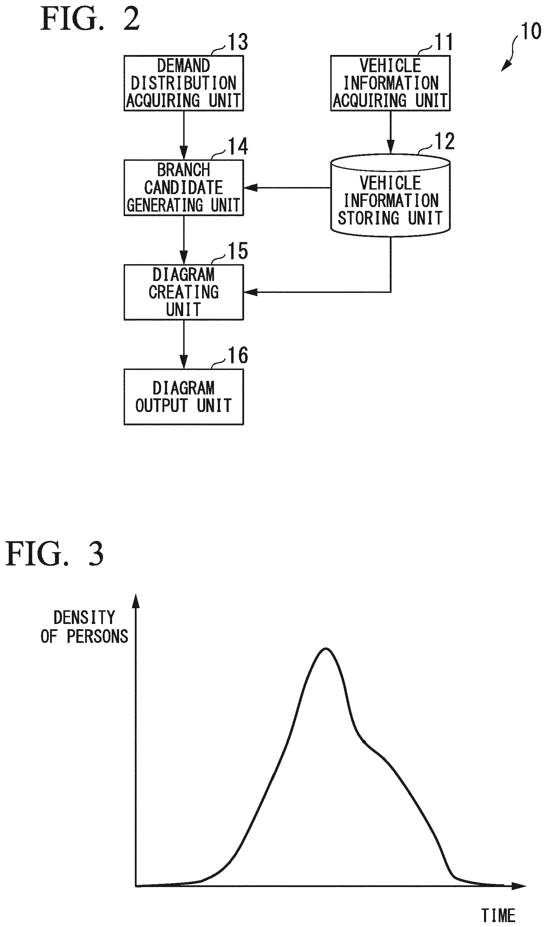

Fig. 2 is a block diagram schematically illustrating a configuration of a diagram creating device 10 according to this embodiment.

As illustrated in Fig. 2, the diagram creating device 10 includes a vehicle information acquiring unit 11, a vehicle information storing unit 12, a demand distribution acquiring unit 13, a branch candidate generating unit 14, a diagram creating unit 15, and a diagram output unit 16. The vehicle information acquiring unit 11 acquires vehicle information which is information on available vehicles. The vehicle information is input using an input device such as a keyboard or a mouse, for example, by an operator of the diagram creating device 10. The vehicle information includes information indicating types of vehicles, information indicating capacities, information indicating the number of vehicles, information indicating vehicle costs, and information indicating a CO2 emission rate. The vehicle information storing unit 12 stores the vehicle information acquired by the vehicle information acquiring unit 11.

The demand distribution acquiring unit 13 acquires a temporal distribution of demand for movement from the station ST to the event site HL (an inbound path) at the time of start of the event and a temporal distribution of demand for movement from the event site HL to the station ST (an outbound path) at the time of end of the event. The temporal distributions are input using an input device such as a keyboard or a mouse, for example, by an operator of the diagram creating device 10. Alternatively, the demand distribution acquiring unit 13 acquires the temporal distributions by receiving the temporal distributions transmitted from another device. For the temporal distribution of demand for the outbound path, the demand distribution acquiring unit 13 acquires temporal distributions of demand corresponding to a plurality of candidates for end times of the event. This is an attempt to cope with a case in which the event ends at a fixed time and a case in which the temporal distribution of demand greatly varies due to a length of delay from the fixed time when the end of the event is delayed.

The branch candidate generating unit 14 generates a group of candidates for branches for each of the temporal distribution of demand with reference to a minimum capacity among the capacities indicated by information stored in the vehicle information storing unit 12 and the temporal distribution of demand acquired by the demand distribution acquiring unit 13. As described above, the temporal distributions of demand include the distribution for the inbound path and the distributions at the end times for the outbound path. In each of the candidates for branches, only the departure time is given and a type of vehicle used as the branch is not assigned yet. Details of the process of generating the group of candidates for branches in the branch candidate generating unit 14 will be described later.

The diagram creating unit 15 creates a diagram by determining a type of vehicle to be used from the group of types of available vehicles for each candidate for a branch belonging to the group of candidates for branches generated by the branch candidate generating unit 14. The group of types includes a type indicating that a vehicle does not depart at the departure time of the branch, that is, that the candidate for the branch is not used. The diagram creating unit 15 uses, for example, a simple genetic algorithm (Simple GA) to determine the type of vehicle to be used.

The diagram creating unit 15 uses the evaluation function expressed by Equation (1) to calculate an evaluation value E for determining the type of vehicle to be used using the simple genetic algorithm.

$$E = \alpha \cdot \text{total vehicle cost} + \beta \cdot \text{average waiting time} + \gamma \cdot \text{total CO2 emission}$$

$$\text{rate} + \delta \cdot \text{average congestion factor} \ldots (1)$$

Here, the total vehicle cost is a total sum of vehicle costs of the types of vehicles assigned to the diagram. For example, when ten middle-sized PHVs each with a vehicle cost of 12000 and three small-sized EVs each with a vehicle cost of 10000 are assigned, the total vehicle cost is $12000 \times 10 + 10000 \times 3 = 150000$. The average waiting time is an average value of waiting times from arrival of passengers at a bus stop to departure of the boarded shuttle bus. The total CO2 emission rate is a total sum of CO2 emission rates of the assigned vehicles. The average congestion factor is a value obtained by dividing the number of persons boarding by the capacity. $\alpha$, $\beta$, $\gamma$, and $\delta$ are predetermined weighting factors. The average waiting time $W_m$ is calculated according to Equation (2).

$$Wm = \frac{\sum_{i,k} D_i \times P_{i,k} \times (Dt_k - i)}{D} \quad \cdots (2)$$

$D_i$ denotes the number of persons of demand at discrete time i. $P_{i,k}$ denotes a probability that persons of demand gets on the shuttle bus of the k-th branch at discrete time i and is calculated according to Equation (3). $Dt_k$ denotes a departure time (discrete time) of the k-th branch. D denotes the total number of persons of demand.

$$P_{i,k} = \frac{e^{V_{i,k}}}{\sum_j e^{V_{i,j}}} \quad \cdots (3)$$

In Equation (3), $V_{i,k}$ denotes a utility function for the k-th branch of demand at discrete time i, and is calculated according to Equation (4).

$$V_{i,k} = A \cdot (Dt_k - i) + B \cdot F_k + C \cdot S_k \quad \cdots (4)$$

Here, A, B, and C are predetermined weighting factors. $F_k$ denotes a bus fare and $S_k$ denotes a congestion factor. For the value of $S_k$, in the overall demand, it can be assumed that a person gets on the first shuttle bus to arrive once the person arrives at a bus stop.

The average congestion factor $H_m$ is calculated according to Equation (5).

$$Hm = \frac{\sum_k \frac{\sum_i D_i \times P_{i,k}}{M_k}}{K} \quad \cdots (5)$$

K denotes the number of branches to be used and $M_k$ denotes a capacity of a vehicle which is used in the k-th branch.

The diagram creating unit 15 repeatedly performs calculation of the evaluation value E for each individual having a chromosome, which will be described later, and determining a chromosome of a next-generation individual using the chromosome of the individual having a large evaluation value E. The diagram creating unit 15 determines a diagram indicated by the chromosome of the individual having the largest evaluation value E as the final diagram when the chromosomes are determined up to a predetermined generation. When each individual is determined, constraint conditions are that the total sum of the capacities of the vehicles used in the diagram indicated by the chromosome of the individual be greater than the total number of persons of demand and that the number of vehicles used for each type be equal to or less than the number of vehicles in the vehicle information.

A genetic algorithm such as a multi-objective genetic algorithm (MOGA) or a multi-chromosome genetic algorithm (MCGA) may be used instead of the simple genetic algorithm. Another method may be used instead of the generic algorithms as long as it is a method of determining the type of vehicle such that the terms of the evaluation value E decrease.

The diagram output unit 16 outputs the created diagram. The output method may be display on a display, printing on a sheet of paper, or output of an electronic file.

Fig. 3 is a graph illustrating an example of the temporal distribution of demand. In Fig. 3, the horizontal axis represents time and the vertical axis represents a density of persons which is the number of persons per unit time. The temporal distribution of demand for movement from the station ST to the event site HL and the temporal distribution of demand for movement from the event site HL to the station ST for candidates for end times of the event, which are acquired by the demand distribution acquiring unit 13, can be expressed by a graph in which the horizontal axis represents the time and the vertical axis represents the density of persons in this way.

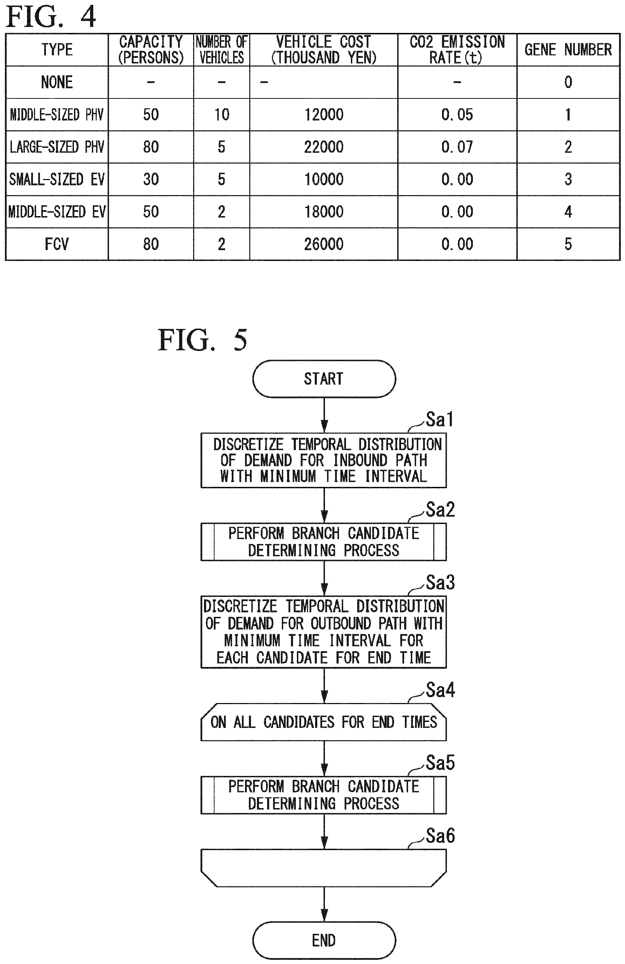

Fig. 4 is a table illustrating an example of the vehicle information which is stored in the vehicle information storing unit 12. The vehicle information storing unit 12 stores a type of vehicle, a capacity (persons) of the type of vehicle, the number of vehicles of the type, a vehicle cost (thousand yen) of the type of vehicle, a $CO_2$ emission rate of the type of vehicle, and a gene number of the type of vehicle as the vehicle information in correlation with each other. The type of vehicle is a type of an available vehicle and is classified into six types of "none," "middle-sized PHV," "large-sized PHV," "small-sized EV," "middle-sized EV," and "FCV" in the example illustrated in Fig. 4. The type of vehicle "none" is a type indicating that the branch candidate to which the type is assigned is not used. In the example illustrated in Fig. 4, "PHV" is an abbreviation for plug-in hybrid vehicle. "EV" is an abbreviation for electric vehicle. "FCV" is an abbreviation for fuel cell vehicle.

The capacity is the number of passengers that can get in the type of vehicle. The number of vehicles is the number of available vehicles of the type. The vehicle cost is a cost of the type of vehicle and is, for example, a value obtained by converting a lease charge at a daily rate. The vehicle cost may include fuel expenses at the time of traveling or personnel expenses of a driver. The $CO_2$ emission rate is an emission rate of carbon dioxide when the vehicle travels a predetermined distance. The $CO_2$ emission rate may be a well-to-wheel $CO_2$ emission rate. The gene number is a number for identifying the type of vehicle and is a number which is used to create a diagram using the genetic algorithm. The vehicle information acquired by the vehicle information acquiring unit 11 may not include the gene number but the vehicle information acquiring unit 11 may assign the gene number.

Fig. 5 is a flowchart illustrating an operation of the branch candidate generating unit 14. First, the branch candidate generating unit 14 discretizes the temporal distribution of demand for the inbound path, which is acquired by the demand distribution acquiring unit 13, with a predetermined minimum time interval (Sal). The minimum time interval is a minimum time interval of departure times of shuttle buses BS and is set, for example, in consideration of safety of the operation. The minimum time interval may be set to an arbitrary time interval. Then, the branch candidate generating unit 14 performs a branch candidate determining process of determining a departure time with reference to the discretized temporal distribution of demand (Sa2). Details of the branch candidate determining process in Step Sa2 will be described separately.

Then, the branch candidate generating unit 14 discretizes the temporal distribution of demand for the outbound path, which is acquired by the branch candidate generating unit 14 for each candidate for an end time of the event, with a predetermined minimum time interval (Sa3). The minimum time interval may be equal to or different from the minimum time interval in Step Sa2. Then, the branch candidate generating unit 14 performs the processes up to Step Sa6, that is, the process of Step Sa5, on each candidate for an end time (Sa4). In Step Sa5, the same branch candidate determining process as in Step Sa2 is performed on the temporal distributions of demand for the outbound path.

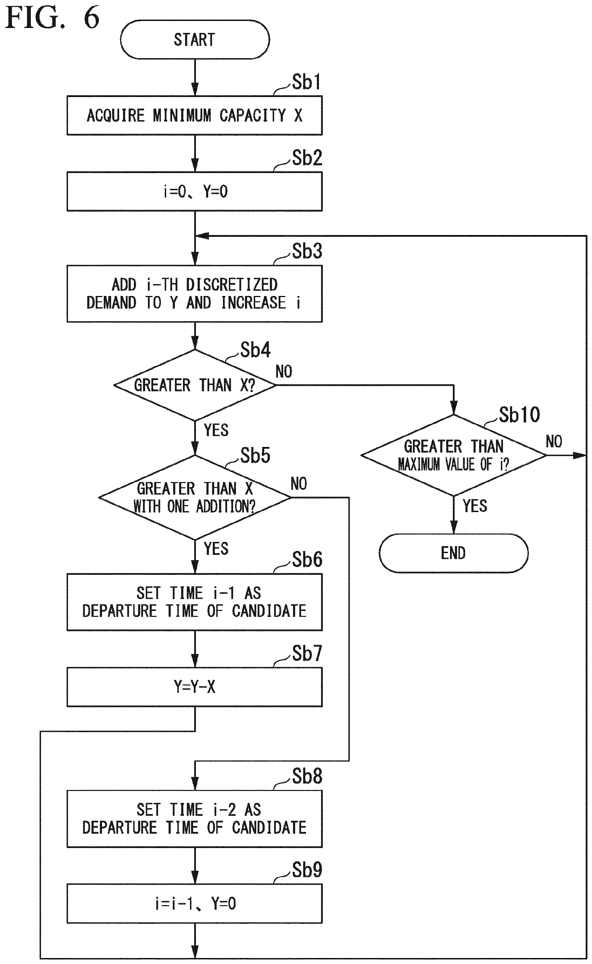

Fig. 6 is a flowchart illustrating details of the branch candidate determining process (Steps Sa2 and Sa5). The branch candidate generating unit 14 acquires a minimum capacity X among the capacities stored in the vehicle information storing unit 12 (Sb1). Then, the branch candidate generating unit 14 sets a counter i of the discrete time and a counter Y of the number of passengers boarding to "0" (Sb2). Then, the branch candidate generating unit 14 adds the number of passengers of the i-th temporal distribution of the discretized temporal distributions of demand as a target to the counter Y The branch candidate generating unit 14 increases the counter i by one (Sb3). Then, the branch candidate generating unit 14 determines whether the value of the counter Y is greater than the capacity X (Sb4). When it is determined that the value of the counter Y is greater than the capacity X (YES in Sb4), the branch candidate generating unit 14 determines whether the value of the counter Y is greater than the capacity X when the addition to the counter Y is performed one time (Sb5). When it is determined that the value of the counter Y is greater than the capacity X when the addition to the counter Y is performed one time (YES in Sb5), the branch candidate generating unit 14 sets the time of discrete time i-1 as the departure time of the branch candidate (Sb6). Then, the branch candidate generating unit 14 counts down the counter Y by the capacity X (Sb7) and returns the process flow to Step Sb3.

On the other hand, when it is determined in Step Sb5 that the value of the counter Y does not exceed the capacity X with one addition (NO in Sb5), the branch candidate generating unit 14 sets the time of discrete time i-2 as the departure time of the branch candidate (Sb8). Then, the branch candidate generating unit 14 decreases the counter i by one, sets the counter Y to "0" (Sb9), and returns the process flow to Step Sb3.

When it is determined in Step Sb4 that the value of the counter Y is not greater than the capacity X (NO in Sb4), the branch candidate generating unit 14 determines whether the value of the counter i is greater than a predetermined maximum value (Sb10). When it is determined that the value of the counter i is greater than the predetermined maximum value (YES in Sb10), the branch candidate generating unit 14 ends the process flow. When it is determined that the value of the counter i is not greater than the predetermined maximum value (NO in Sb10), the branch candidate generating unit 14 returns the process flow to Step Sb3.

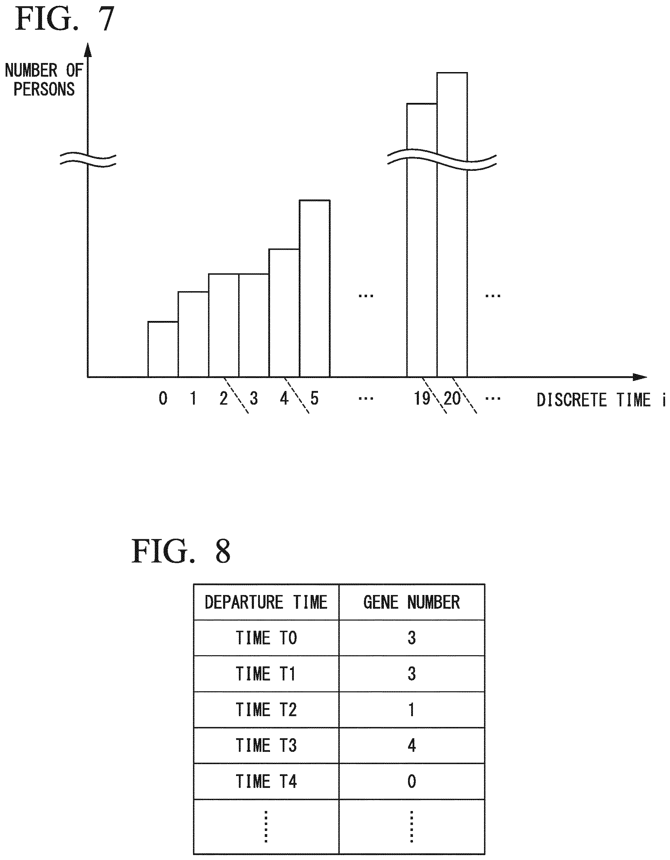

Fig. 7 is a graph illustrating the branch candidate determining process. As described with reference to the flowchart illustrated in Fig. 6, the branch candidate generating unit 14 adds the number of passengers of demand from smaller discrete time i. The branch candidate generating unit 14 sets the discrete time "2" immediately previous to the discrete time (which is assumed to be "3" herein) at which the addition result is greater than the capacity X as the departure time of the branch candidate. Similarly, the branch candidate generating unit 14 sets the discrete times "4" and "19" as the departure time of the branch candidate. Since the demand at the discrete time "20" is greater than the capacity X, the discrete time "20" is set as the departure time of the branch candidate.

Fig. 8 is a table illustrating an example of chromosomes which are used for the genetic algorithm in the diagram creating unit 15. In Fig. 8, the departure time is the departure time of the branch candidate determined by the branch candidate generating unit 14. The gene number correlated with each departure time is one of the gene numbers included in the vehicle information. The table illustrated in Fig. 8 represents the chromosomes of one individual. One individual is created for the inbound path and one individual is created for each end time of the outbound path.

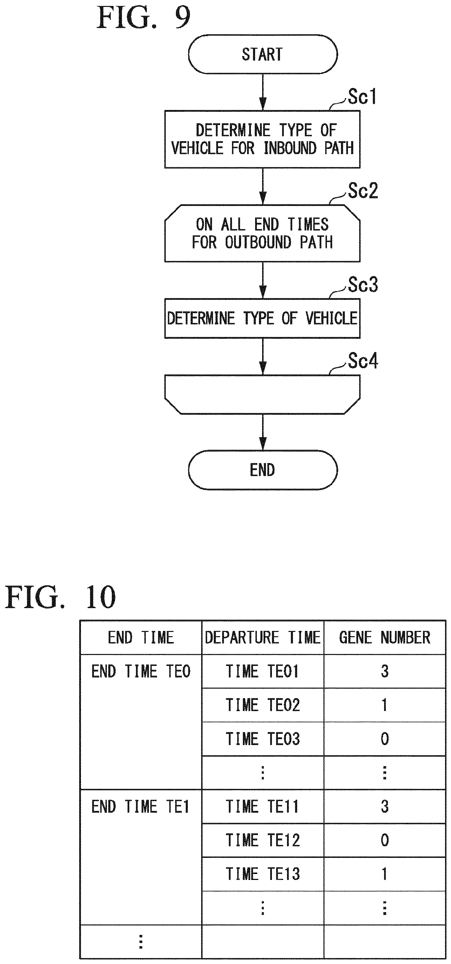

Fig. 9 is a flowchart illustrating an operation of the diagram creating unit 15. First, the diagram creating unit 15 determines a type of vehicle for each branch candidate for the outbound path using a genetic algorithm (Sc1). Then, the diagram creating unit 15 performs the process up to Step Sc4, that is, the process of Step Sc3, on all the end times of the outbound path (Sc2) and ends the process flow. In Step Sc3, the diagram creating unit 15 determines a type of vehicle for each branch candidate for an end time as a target using the genetic algorithm.

In this embodiment, the evaluation value E employs a weighting factor method (a load summing method) to represent a purpose of compressing the vehicle cost, the waiting time, the CO2 emission rate, and the congestion factor, but a constraint method, a lexicographic sorting method, or the like may be employed.

The CO2 emission rate is set to a fixed value, but may vary depending on the number of persons boarding. The waiting time may be set until an arrival time at a destination instead of the departure time.

In Step Sb6 of Fig. 6, time i in addition to time i-1 may also be set as a departure time of a candidate. Accordingly, when a vehicle is full and there is a passenger not boarding the vehicle, the passenger may be made to wait as little as possible. Steps Sb5, Sb8, and Sb9 of Fig. 6 may not be provided and the process flow may move to Step Sb6 when it is determined in Step Sb4 that the value of the counter Y is greater than the capacity X. Accordingly, a discrete time at which the shuttle bus with a capacity X is full is the departure time of the branch candidate.

In this way, the branch candidate generating unit 14 generates a group of candidates for departure times with reference to the temporal distribution of demand and the minimum capacity of the capacities of the available vehicles. The diagram creating unit 15 determines a type of vehicle which will depart at the departure time among the group of types of available vehicles for the departure time of each candidate belonging to the group of candidates. The group of candidates includes a type indicating that a vehicle does not depart at the departure time.

It has been described above that the minimum capacity of the capacities of the available vehicles is referred to, but an arbitrary capacity may be referred to. In Step Sa2 of Fig. 5, the branch candidate is generated using the distribution of demand and the capacities, but the branch candidate may be generated for each minimum time interval when the demand is discretized.

Accordingly, the group of candidates for departure times constitutes a diagram when the capacities of all the vehicles are equal to the minimum capacity. When the diagram creating unit 15 determines a type of vehicle, the type of vehicle includes a type indicating that a vehicle does not depart at the departure time. Accordingly, a departure time which is not used can be disposed in the group of candidates for departure times and thus a margin caused when a vehicle having a large capacity is used can be absorbed. Therefore, it is possible to create a diagram using a plurality of types of vehicles having different capacities.

(Second Embodiment)

A diagram creating device 10 according to a second embodiment has the same configuration as in the first embodiment, but is different therefrom in the operation of the diagram creating unit 15. The diagram creating device 10 according to the first embodiment creates a diagram by separately performing optimization on each end time for the outbound path. However, this embodiment is different from the first embodiment, in that the diagram creating unit 15 creates a diagram such that chromosomes matched in all the branch candidates for end times are set as one individual and the order of vehicles to be used is the same even at different end times.

Fig. 10 is a table illustrating an example of a chromosome for a outbound path in this embodiment. As illustrated in Fig. 10, the chromosome for the outbound path has a gene number for each combination of an end time of an event and a departure time of a branch candidate for the end time. Accordingly, the diagram creating unit 15 creates diagrams of all the end times at the same time.

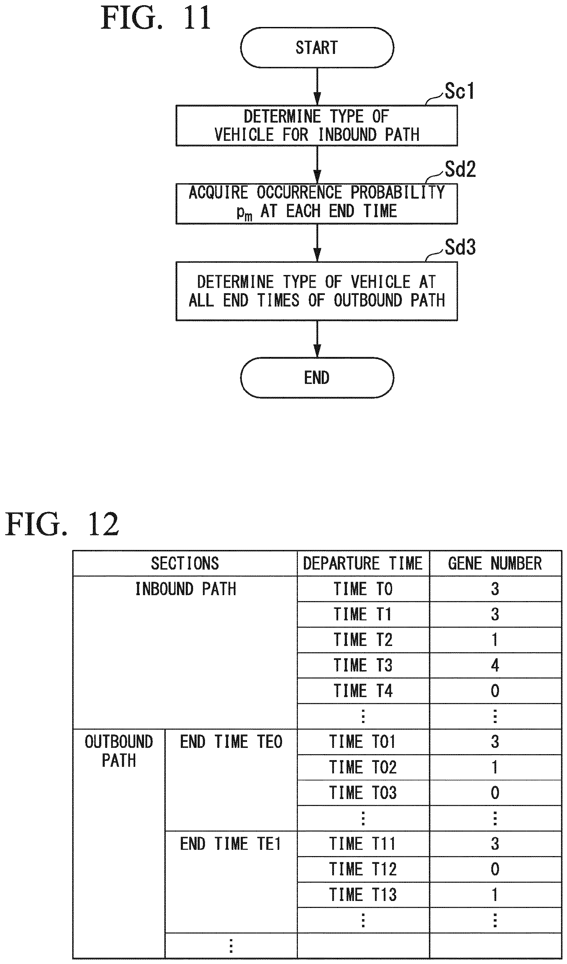

Fig. 11 is a flowchart illustrating an operation of the diagram creating unit 15 according to this embodiment. First, the diagram creating unit 15 determines a type of vehicle of each branch candidate for the inbound path, similarly to Step Sc1 in Fig. 9. Then, the diagram creating unit 15 acquires an occurrence probability of each end time (Sd2). An occurrence probability pm of the m-th end time is input, for example, from the outside along with a temporal distribution of demand of each end time. Then, the diagram creating unit 15 determines a type of vehicle of each branch candidate for all the end times of the outbound path (Sd3). In Step Sd3, the diagram creating unit 15 determines the type of vehicle using a multi-chromosome based genetic algorithm (MCGA) which is a kind of genetic algorithm. The evaluation value Et at this time is calculated using an evaluation function expressed by Equation (6).

$$Et = \sum_m E_m \times p_m \qquad \cdots (6)$$

Here, $E_m$ is E which is calculated for the m-th end time using Equation (1). $p_m$ is an occurrence probability of the m-th end time.

The following three constraint conditions are used to determine an individual. The first constraint condition is that the total sum of the capacities of the types of vehicles which are assigned in the diagrams for the end times be greater than the total number of persons of demand. The second constraint condition is that the number of vehicles used for each type in the diagrams for the end times be equal to or less than the number of vehicles in the vehicle information. The third constraint condition is that orders of the types of vehicles to be used be the same in the diagrams for the end times.

The order of the types of vehicles to be used is an order when the type indicating that the vehicle does not depart at the departure time of the corresponding branch candidate (the corresponding candidate is not used) is excluded. For example, an order of "middle-sized PHV" "large-sized PHV," "not departure," and "FCV" and an order of "middle-sized PHV," "no departure," "large-sized PHV," and "FCV" are both the same as an order of "middle-sized PHV," "large-sized PHV," and "FCV" when "no departure" is excluded.

Since the number of branches may vary depending on the end time, the diagram creating unit 15 determines that the orders of the types of vehicles to be used are the same when the order including the smaller number of branches matches. For example, when there are an order including the four branches "middle-sized EV," "large-sized PHV," "middle-sized PHV," and "FCV" and an order including the three branches "middle-sized EV," "large-sized PHV," and "middle-sized PHV," the three branches "middle-sized EV," "large-sized PHV," and "middle-sized PHV" from the head match and thus the diagram creating unit 15 determines that the orders are the same.

In the second embodiment, similarly to the first embodiment, it is possible to create a diagram using a plurality of types of vehicles having different capacities.

In this way, the diagram creating unit 15 determines the types of vehicles which will depart at the departure times for the outbound paths such that all the candidates for end times have the same order when the types of vehicles other than the type indicating that the vehicle does not depart at the departure time of the corresponding branch candidate are arranged in the order of departure times for the outbound path.

Accordingly, the configurations of the vehicles to be used are substantially the same in spite of different end times. It is possible to suppress the number of vehicles which are not used, that is, the number of vehicles which are created but may or may not be used, depending to the end times.

(Third Embodiment)

A diagram creating device 10 according to a third embodiment is the same as that of the first embodiment in configuration, but the operation of the diagram creating unit 15 is different. The diagram creating device 10 according to the first embodiment creates a diagram by separately optimizing the outbound path by the end times. However, the diagram creating unit 15 according to this embodiment sets chromosomes in which the branch candidates for the inbound path and the outbound path are matched as a single individual and determines a diagram such that the vehicles used for the inbound path and the vehicles used for the outbound path overlap each other more.

Fig. 12 is a table illustrating an example of a chromosome in this embodiment. As illustrated in Fig. 12, the chromosome in this embodiment has a gene number for each combination of an end time of an event and a departure time of a branch candidate for the end time in addition to a departure time of a branch for an inbound path. Accordingly, the diagram creating unit 15 creates diagrams for the inbound path and the outbound path at the same time.

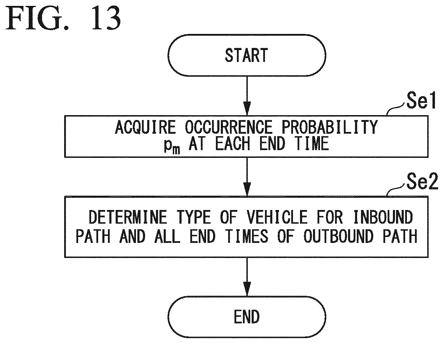

Fig. 13 is a flowchart illustrating an operation of the diagram creating unit 15 according to this embodiment. First, similarly to Step Sd2 of Fig. 11, the diagram creating unit 15 determines an occurrence probability of each end time (Se1). Then, the diagram creating unit 15 determines a type of vehicle of each branch candidate for all the end times of the outbound path and the inbound path (Se2). The evaluation value Eu at this time is calculated using an evaluation function expressed by Equation (7).

$$Eu = \varepsilon \cdot Cd + \zeta \cdot \left(E_0 + \sum_m E_m \times p_m\right) \quad \cdots (7)$$

Here, $C_d$ denotes a sum of vehicle costs of a set of vehicles not overlapping (A EXOR B) in a set of vehicles A assigned to the inbound path and a set of vehicles B having the most assigned vehicles at the end times of the outbound path. $E_0$ is E which is calculated for the inbound path using Equation (1). $E_m$ is E which is calculated for the m-th end time using equation (1). $\varepsilon$ and $\xi$ are predetermined weighting factors.

The following three constraint conditions are used to determine an individual. The first constraint condition is that the total sum of the capacities of the types of vehicles which are assigned in the diagrams for the end times and the diagram for the inbound path be greater than the total number of persons of demand. The second constraint condition is that the number of vehicles used for each type in the diagrams for the end times and the diagram for the inbound path be equal to or less than the number of vehicles in the vehicle information. The third constraint condition is that orders of the types of vehicles to be used be the same in the diagrams for the end times.

The constraint conditions for determining an individual may include only the first and second constraint conditions without including the third constraint condition. In this case, $C_d$ in Equation (7) denotes a sum of vehicle costs of a set of vehicles not overlapping (A EXOR B) in a set of vehicles A having the most assigned vehicles not overlapping the vehicles for the inbound path at the end times of the outbound path and a set of vehicles B assigned to the inbound path.

In the third embodiment, similarly to the first embodiment, it is possible to create a diagram using a plurality of types of vehicles having different capacities.

In this way, the diagram creating unit 15 simultaneously determines the diagrams for the inbound path and the end times of the outbound path. The evaluation function used to determine the diagrams includes a term relevant to the vehicles not overlapping each other among the vehicles used for the inbound path and the vehicles used for any one of the candidates for end times for the outbound path.

Accordingly, it is possible to suppress the number of vehicles not overlapping in the inbound path and the outbound path.


(Fourth Embodiment)


A diagram creating device 10 according to a fourth embodiment is the same as the first embodiment in configuration, but is different therefrom in the operation of the diagram output unit 16. The diagram output unit 16 in this embodiment outputs a diagram for an inbound path similarly to the first embodiment. However, for a diagram for a outbound path, the diagram output unit 16 determines to which of a plurality of candidates for end times an end time of an event is closest and outputs the diagram of the candidate determined to be closest.

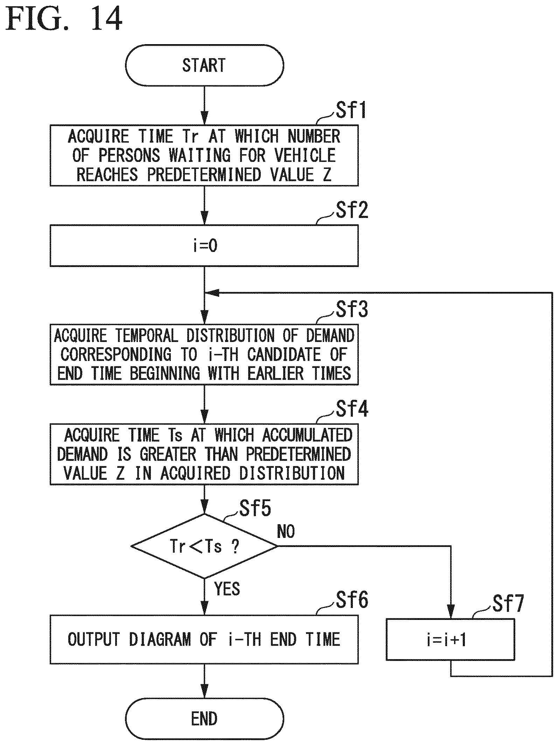

Fig. 14 is a flowchart illustrating an operation of the diagram output unit 16 according to a fourth embodiment. The flowchart illustrated in Fig. 14 describes the operation of the diagram output unit 16 at the time of outputting a diagram for a outbound path. The diagram output unit 16 acquires a time Tr at which the number of persons waiting to board reaches a predetermined value Z (Sf1). For example, an operator of the diagram creating device 10 observes a line of persons standing at the bus stop in the vicinity of the event site HL, checks that the number of persons standing is greater than Z, and performs an input operation of notifying of the fact that the number of persons standing is greater than Z using an input device such as a keyboard or a mouse. Then, the diagram output unit 16 sets the time at which the input operation is performed as the time Tr.

Then, the diagram output unit 16 resets the value of the counter i to "0" (Sf2). Then, the diagram output unit 16 acquires a temporal distribution of demand corresponding to the candidate of the i-th end time beginning with earlier times (Sf3). Then, the diagram output unit 16 acquires a time Ts at which the accumulated demand is greater than a predetermined value Z from the acquired distribution (Sf4). The diagram output unit 16 determines whether the time Ts is less than the time Tr (Sf5). When it is determined that the time Ts is less than the time Tr (YES in Sf5), the diagram output unit selects and outputs the diagram at the i-th end time (Sf6). On the other hand, when it is determined in Step Sf5 that the time Ts is not less than the time Tr (NO in Sf5), the process flow is returned to Step Sf3 after the counter i is increased by one (Sf7).

The diagram output unit 16 selects the end time closest to the time Tr among the end times at which the time Ts at which the accumulated demand is equal to or greater than Z is greater than the time Tr at which the number of persons waiting to board is equal to or greater than Z, but the present invention is not limited thereto. For example, the diagram output unit 16 may select the end time closest to the time Tr among the end times at which the time Ts is less than the time Tr, or may select the end time closest to the time Tr from the end time Ts(L) closest to the time Tr among the end times which are greater than the time Tr at which the number of persons waiting to board is equal to or greater than Z and the end time Ts(S) closest to the time Tr among the end times which are less than the time Tr.

The diagram creating unit 15 may be the same as the diagram creating unit 15 in the second embodiment or the third embodiment.

In the fourth embodiment, similarly to the first embodiment, it is possible to create a diagram using a plurality of types of vehicles having different capacities.

In this way, the diagram output unit 16 determines a diagram showing which candidate among the candidates for end times should be used depending on the time at which the number of persons waiting for a vehicle reaches a predetermined number.

Accordingly, it is possible to use a diagram corresponding to an end time of an event even when the end time of the event cannot be directly ascertained.

According to at least one of the above-mentioned embodiments, by including the branch candidate generating unit 14 that generates a group of candidates for departure times with reference to the temporal distribution of demand and the minimum capacity of the capacities of the available vehicles and the diagram creating unit 15 that determines a type of vehicle which will depart at the departure time from the group of types of available vehicles at the departure time of each candidate belonging to the group of candidates in which the group of types includes a type indicating that a vehicle thereof does not depart at the departure time, it is possible to easily create a diagram using a plurality of types of vehicles having different capacities.

The diagram creating device 10 may be realized by recording a program for embodying the functions of the diagram creating device 10 illustrated in Fig. 2 on a computer-readable recording medium and causing a computer system to read and execute the program recorded on the recording medium. The "computer system" mentioned herein includes an operating system (OS) or hardware such as peripherals.

When a WWW system is used, the "computer system" includes a homepage providing environment (or a homepage display environment).

Examples of the "computer-readable recording medium" include a portable medium such as a flexible disk, a magneto-optical disc, a ROM, or a CD-ROM and a storage device such as a hard disk built in the computer system. The "computer-readable recording medium" may include a medium that dynamically holds a program for a short time like a communication line when a program is transmitted via a network such as the Internet or a communication line such as a telephone circuit or a medium that holds a program for a predetermined time like a volatile memory in a computer system serving as a server or a client in that case. The program may embody a part of the above-mentioned functions or may embody the above-mentioned functions in combination with a program which has been recorded on the computer system in advance.

While some embodiments of the present invention have been described above, the embodiments are only examples and are not intended to limit the scope of the invention. These embodiments can be embodied in various other forms and may be subjected to various omissions, substitutions, or modifications without departing from the gist of the invention. The embodiments or modifications thereof are included in the scope of the invention or the gist thereof and are included in a scope equivalent to the inventions described in the appended claims.

**Claims**

1.    A diagram creating method comprising:

a first step of generating a group of candidates for departure times at a first spot with reference to a temporal distribution of demand for movement to a second spot at the first spot and a minimum capacity among capacities of available vehicles; and

a second step of creating a diagram from the first spot to the second spot by determining a type of vehicle which departs at one departure time from a group of types of the available vehicles for each candidate for a departure time belonging to the group of candidates for departure times,

wherein the group of types includes a type indicating that the type of vehicle does not depart at the departure time.

2. The diagram creating method according to claim 1, further comprising:

a third step of generating a group of candidates for departure times at the second spot for each candidate for an end time with reference to a temporal distribution of demand for movement from the second spot to the first spot for each of a plurality of candidates for end times of an event which is held in the vicinity of the second spot; and
a fourth step of creating a diagram from the second spot to the first spot for each candidate for an end time by determining a type of vehicle which departs at one departure time from the group of types for each candidate for a departure time belonging to the group of candidates for departure times at the second spot for each candidate for an end time.

3. The diagram creating method according to claim 2, wherein the fourth step includes determining the type of vehicle which departs at each departure time of the second spot to enable all the candidates for end times to have the same order when the types of vehicles other than the type of vehicle indicating that the type of vehicle does not depart are arranged in an order of departure times at the second spot.

4. The diagram creating method according to claim 2 or 3, wherein the second step and the fourth step are simultaneously performed using a predetermined evaluation function, and
the predetermined evaluation function includes a term relevant to the vehicles which do not overlap each other among the vehicles used on the basis of the types of vehicles determined in the second step and the vehicles used on the basis of the types of vehicles determined for any one of the candidates for end times.

5. The diagram creating method according to any one of claims 2 to 4, further comprising a step of determining which of the diagrams of the candidates for end times to use on the basis of a time at which the number of persons waiting for a vehicle bound for the first spot at the second spot reaches a predetermined number.

# FIG. 1

FIG. 2

```
┌──────────────┐13        ┌──────────────┐11        ↙10
│    DEMAND    │          │   VEHICLE    │
│ DISTRIBUTION │          │ INFORMATION  │
│ACQUIRING UNIT│          │ACQUIRING UNIT│
└──────────────┘          └──────────────┘
        │                         │
        ▼                         ▼
┌──────────────┐14        ┌──────────────┐12
│    BRANCH    │          │   VEHICLE    │
│  CANDIDATE   │◄─────────│ INFORMATION  │
│GENERATING UNIT│         │ STORING UNIT │
└──────────────┘          └──────────────┘
        │                         │
        ▼                         │
┌──────────────┐15                │
│   DIAGRAM    │◄─────────────────┘
│   CREATING   │
│     UNIT     │
└──────────────┘
        │
        ▼
┌──────────────┐16
│   DIAGRAM    │
│ OUTPUT UNIT  │
└──────────────┘
```

FIG. 3

# FIG. 4

| TYPE | CAPACITY (PERSONS) | NUMBER OF VEHICLES | VEHICLE COST (THOUSAND YEN) | CO2 EMISSION RATE(t) | GENE NUMBER |
|---|---|---|---|---|---|
| NONE | – | – | – | – | 0 |
| MIDDLE-SIZED PHV | 50 | 10 | 12000 | 0.05 | 1 |
| LARGE-SIZED PHV | 80 | 5 | 22000 | 0.07 | 2 |
| SMALL-SIZED EV | 30 | 5 | 10000 | 0.00 | 3 |
| MIDDLE-SIZED EV | 50 | 2 | 18000 | 0.00 | 4 |
| FCV | 80 | 2 | 26000 | 0.00 | 5 |

# FIG. 5

START

Sa1
DISCRETIZE TEMPORAL DISTRIBUTION OF DEMAND FOR INBOUND PATH WITH MINIMUM TIME INTERVAL

Sa2
PERFORM BRANCH CANDIDATE DETERMINING PROCESS

Sa3
DISCRETIZE TEMPORAL DISTRIBUTION OF DEMAND FOR OUTBOUND PATH WITH MINIMUM TIME INTERVAL FOR EACH CANDIDATE FOR END TIME

Sa4
ON ALL CANDIDATES FOR END TIMES

Sa5
PERFORM BRANCH CANDIDATE DETERMINING PROCESS

Sa6

END

# FIG. 6

```
                    ┌─────────────┐
                    │    START    │
                    └──────┬──────┘
                           │  ╭─Sb1
              ┌────────────▼────────────┐
              │ ACQUIRE MINIMUM CAPACITY X │
              └────────────┬────────────┘
                           │  ╭─Sb2
              ┌────────────▼────────────┐
              │       i=0、Y=0          │
              └────────────┬────────────┘
                           │  ╭─Sb3
              ┌────────────▼────────────┐
              │   ADD i-TH DISCRETIZED   │
              │ DEMAND TO Y AND INCREASE i │
              └────────────┬────────────┘
                           │  ╭─Sb4
                        ◇ GREATER THAN X? ◇──NO──┐
                           │                     │ ╭─Sb10
                          YES              ◇ GREATER THAN ◇──NO──►
                           │ ╭─Sb5         ◇ MAXIMUM VALUE OF i? ◇
                  ◇ GREATER THAN X ◇──NO──┐      │
                  ◇ WITH ONE ADDITION? ◇  │     YES
                           │              │  ┌────▼────┐
                          YES             │  │   END   │
                           │ ╭─Sb6        │  └─────────┘
              ┌────────────▼────────────┐ │
              │     SET TIME i-1 AS      │ │
              │ DEPARTURE TIME OF CANDIDATE │ │
              └────────────┬────────────┘ │
                           │ ╭─Sb7        │
              ┌────────────▼────────────┐ │
              │         Y=Y-X            │ │
              └────────────┬────────────┘ │
                           │              │
                           │ ╭─Sb8        │
              ┌────────────▼────────────┐ │
              │     SET TIME i-2 AS      │ │
              │ DEPARTURE TIME OF CANDIDATE │ │
              └────────────┬────────────┘ │
                           │ ╭─Sb9        │
              ┌────────────▼────────────┐ │
              │       i=i-1、Y=0         │ │
              └────────────┬────────────┘ │
                           └──────────────┘
```

# FIG. 7

NUMBER OF PERSONS

0  1  2  3  4  5  ...  19  20  ...  DISCRETE TIME i

# FIG. 8

| DEPARTURE TIME | GENE NUMBER |
|---|---|
| TIME T0 | 3 |
| TIME T1 | 3 |
| TIME T2 | 1 |
| TIME T3 | 4 |
| TIME T4 | 0 |
| ⋮ | ⋮ |

FIG. 9

```
        ┌─────────────┐
        │    START    │
        └─────────────┘
               │
               ▼              Sc1
    ┌────────────────────────┐
    │   DETERMINE TYPE OF     │
    │ VEHICLE FOR INBOUND PATH│
    └────────────────────────┘
               │
               ▼              Sc2
    ┌────────────────────────┐
    │    ON ALL END TIMES     │
    │   FOR OUTBOUND PATH      │
    └────────────────────────┘
               │
               ▼              Sc3
    ┌────────────────────────┐
    │ DETERMINE TYPE OF VEHICLE│
    └────────────────────────┘
               │
               ▼              Sc4
    ┌────────────────────────┐
    │                        │
    └────────────────────────┘
               │
               ▼
        ┌─────────────┐
        │     END     │
        └─────────────┘
```

FIG. 10

| END TIME | DEPARTURE TIME | GENE NUMBER |
|---|---|---|
| END TIME TE0 | TIME TE01 | 3 |
| | TIME TE02 | 1 |
| | TIME TE03 | 0 |
| | ⋮ | ⋮ |
| END TIME TE1 | TIME TE11 | 3 |
| | TIME TE12 | 0 |
| | TIME TE13 | 1 |
| | ⋮ | ⋮ |
| ⋮ | | |

FIG. 11

```
        ┌─────────────┐
        │    START    │
        └─────────────┘
               │
               ▼                    ⟋Sc1
 ┌──────────────────────────────┐
 │     DETERMINE TYPE OF         │
 │  VEHICLE FOR INBOUND PATH     │
 └──────────────────────────────┘
               │
               ▼                    ⟋Sd2
 ┌──────────────────────────────┐
 │ ACQUIRE OCCURRENCE PROBABILITY│
 │   pₘ AT EACH END TIME         │
 └──────────────────────────────┘
               │
               ▼                    ⟋Sd3
 ┌──────────────────────────────┐
 │  DETERMINE TYPE OF VEHICLE AT │
 │ ALL END TIMES OF OUTBOUND PATH│
 └──────────────────────────────┘
               │
               ▼
        ┌─────────────┐
        │     END     │
        └─────────────┘
```

FIG. 12

| SECTIONS | | DEPARTURE TIME | GENE NUMBER |
|---|---|---|---|
| INBOUND PATH | | TIME T0 | 3 |
| | | TIME T1 | 3 |
| | | TIME T2 | 1 |
| | | TIME T3 | 4 |
| | | TIME T4 | 0 |
| | | ⋮ | ⋮ |
| OUTBOUND PATH | END TIME TE0 | TIME T01 | 3 |
| | | TIME T02 | 1 |
| | | TIME T03 | 0 |
| | | ⋮ | ⋮ |
| | END TIME TE1 | TIME T11 | 3 |
| | | TIME T12 | 0 |
| | | TIME T13 | 1 |
| | | ⋮ | ⋮ |
| | ⋮ | | |

FIG. 13

```
        ┌─────────────────────┐
        │        START        │
        └─────────────────────┘
                   │
                   ▼                        ╭Se1
┌────────────────────────────────────┐
│   ACQUIRE OCCURRENCE PROBABILITY    │
│       p_m AT EACH END TIME          │
└────────────────────────────────────┘
                   │
                   ▼                        ╭Se2
┌────────────────────────────────────┐
│  DETERMINE TYPE OF VEHICLE FOR INBOUND │
│ PATH AND ALL END TIMES OF OUTBOUND PATH│
└────────────────────────────────────┘
                   │
                   ▼
        ┌─────────────────────┐
        │         END         │
        └─────────────────────┘
```

FIG. 14

```
                    ┌─────────────┐
                    │    START    │
                    └─────────────┘
                           │
                           ▼                    ⟋Sf1
        ┌────────────────────────────────────┐
        │ ACQUIRE TIME Tr AT WHICH NUMBER     │
        │ OF PERSONS WAITING FOR VEHICLE      │
        │ REACHES PREDETERMINED VALUE Z       │
        └────────────────────────────────────┘
                           │
                           ▼                    ⟋Sf2
        ┌────────────────────────────────────┐
        │               i=0                  │
        └────────────────────────────────────┘
                           │
                           ▼◄──────────────────────────────┐
                                                ⟋Sf3        │
        ┌────────────────────────────────────┐             │
        │ ACQUIRE TEMPORAL DISTRIBUTION OF DEMAND│          │
        │ CORRESPONDING TO i-TH CANDIDATE OF  │             │
        │ END TIME BEGINNING WITH EARLIER TIMES│            │
        └────────────────────────────────────┘             │
                           │                                │
                           ▼                    ⟋Sf4        │
        ┌────────────────────────────────────┐             │
        │ ACQUIRE TIME Ts AT WHICH ACCUMULATED│             │
        │ DEMAND IS GREATER THAN PREDETERMINED│             │
        │ VALUE Z IN ACQUIRED DISTRIBUTION    │             │
        └────────────────────────────────────┘             │
                           │        ⟋Sf5                    │
                           ▼                                │
                        ╱─────╲      NO                     │
                      ╱  Tr<Ts ?  ╲──────────┐              │
                        ╲─────╱               │             │
                           │ YES              │             │
                           ▼      ⟋Sf6        ▼   ⟋Sf7      │
        ┌────────────────────────────┐    ┌──────────┐      │
        │ OUTPUT DIAGRAM OF i-TH END  │    │  i=i+1   │──────┘
        │ TIME                        │    └──────────┘
        └────────────────────────────┘
                           │
                           ▼
                    ┌─────────────┐
                    │     END     │
                    └─────────────┘
```

<table>
<tr><td colspan="2" align="center">**INTERNATIONAL SEARCH REPORT**</td><td>International application No.<br>PCT/JP2015/052139</td></tr>
</table>

| A. CLASSIFICATION OF SUBJECT MATTER |
|---|
| G08G1/127(2006.01)i, G06Q50/30(2012.01)i, B61L27/00(2006.01)n |

According to International Patent Classification (IPC) or to both national classification and IPC

| B. FIELDS SEARCHED |
|---|
| Minimum documentation searched (classification system followed by classification symbols)<br>G08G1/127, G06Q50/30, B61L27/00 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-244177 A (Kabushiki Kaisha AV Planning Center),<br>28 October 2010 (28.10.2010),<br>paragraphs [0021] to [0043]<br>(Family: none) | 1-5 |
| A | JP 2001-30904 A (Hitachi, Ltd.),<br>06 February 2001 (06.02.2001),<br>paragraphs [0018] to [0022]<br>(Family: none) | 1-5 |

| ☐ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 April 2015 (20.04.15) | Date of mailing of the international search report<br>28 April 2015 (28.04.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001030904 A